# EUROPÄISCHE PATENTSCHRIFT

(11) **EP 3 578 835 B1**
(45) Veröffentlichungstag und Bekanntmachung des Hinweises auf die Patenterteilung: **10.08.2022**
(21) Anmeldenummer: 18175689.1
(22) Anmeldetag: 04.06.2018
(51) Int. Cl.: F16B 25/00, F16B 5/02, F16B 35/04, F16B 25/10

(54) **FASSADENPLATTENSCHRAUBE UND BEFESTIGUNGSANORDNUNG HIERMIT**
FAÇADE PLATE SCREW AND FASTENING ARRANGEMENT USING THE SAME
VIS DE PLAQUE DE FAÇADE ET DISPOSITIF DE FIXATION CORRESPONDANT

(43) Veröffentlichungstag der Anmeldung: 11.12.2019
(73) Patentinhaber: SFS Group International AG, 9435 Heerbrugg (CH)
(72) Erfinder: MAIR, Roland, 6840 Götzis (AT); BACHMANN, Oliver, 9443 Widnau (CH); ANDERSAG, Markus, 6890 Lustenau (AT)

(56) Entgegenhaltungen:
- WO-A1-2015/035374
- DE-A1- 3 420 863
- DE-A1- 19 640 585

## Beschreibung

Die vorliegende Erfindung befasst sich mit einer Fassadenplattenschraube mit verbesserten Montageeigenschaften sowie einer Fassadenbefestigungsanordnung mit einer solchen Fassadenplattenschraube.

### HINTERGRUND

Im Nachfolgenden sei mit Fassadenplattenschraube eine Schraube definiert, die spezifisch für die Befestigung von Platten bzw. plattenförmigen Bauteilen (Fassadenplatten) an einer metallischen Unterkonstruktion ausgelegt ist, wobei die Materialstärke der Unterkonstruktion am Befestigungspunkt nur wenige Millimeter beträgt. Die Anwendung sei dabei nicht auf vertikale Befestigungsanordnungen und Fassaden eingeschränkt. Der Begriff Platte, Fassadenplatte bzw. plattenförmiges Bauteil bezieht sich auf alle im Wesentlichen flächig ausgedehnten Verkleidungselemente, welche nicht notwendigerweise homogene Stärke aufweisen müssen. Solche Fassadenplatten können mit einer Vielzahl von Materialien hergestellt werden, e.g. aus Faserzement, Kunststoff, Metall, Holz bzw. in Sandwichbauweise aus solchen Materialien.

Die Fassadenplatten werden üblicherweise auf einer Unterkonstruktion befestigt, welche die Fassadenplatte in Position vor der statisch tragenden Gebäudewand hält. Die Unterkonstruktion muss in der Lage sein, das Gewicht der Fassadenplatten, auftretende Windlasten und auch die unterschiedliche thermische Ausdehnung aufzunehmen.

Eine grundsätzliche Forderung an die Fassadenplattenbefestigung ist, dass sie neben dem Eigengewicht der Fassadenplatte auch auf die Platte einwirkende äussere Kräfte in die Unterkonstruktion ableiten kann. Windsog und Winddruck wie auch durch Sonnenstrahlung verursachte Dehnungsspannungen müssen über die Befestigungspunkte abgeleitet werden. Üblicherweise wird daher eine Unterkonstruktion mit Metall-Profilelementen ausgeführt. Als Kompromiss aus statischen Bedürfnissen und Kosten wird üblicherweise am Befestigungspunkt eine Materialstärke von 2 bis 6.5mm aus Aluminium bzw. 0.9 bis 2.5mm aus Stahl verwendet, für den beschriebenen Anwendungsfall von plattenförmigen Fassadenelementen mit 8-14mm Stärke.

Grundsätzlich ist es wichtig, dass Schrauben zur Fassadenplattenbefestigung ein hohes Rückdrehmoment besitzen, weil eine sich lockernde Schraube zu Vibrationen, Klappergeräuschen bzw. dem Herabfallen von Fassadenplatten führen könnte.

### STAND DER TECHNIK

Es sind im Stand der Technik verschiedene Lösungen zur Fassadenplattenbefestigung bekannt. Bei unsichtbaren Konstruktionen sind die Befestigungspunkte bzw. -elemente allein auf der Rückseite angebracht und damit nach Montage für den Betrachter nicht sichtbar. Montage, Wartung und Reparatur sind allerdings aufwändig.

Bei sichtbaren Befestigungen können Nietverbindungen, insbesondere Blindnietverbindungen und Schraubverbindungen (auch in Kombination mit Klebehalterungen) eingesetzt werden. Dabei sind in den meisten Fällen die Fassadenplattenelemente vorgebohrt, um den Aufwand auf der Baustelle gering zu halten und um ein einheitliches Bild der Fassade zu gewährleisten. Diese Vorbohrungen sind vergleichsweise gross dimensioniert, um den Fassadenplattenelementen bei thermischer Ausdehnung ein Ausweichen in der Verlegeebene relativ zum Befestigungspunkt zu erlauben. Andererseits bieten solche Durchbohrungen der Fassadenplatte, die deutlich grösser als der Nenndurchmesser der verwendeten Schraube sind, der Schraube beim Setzvorgang praktisch keine Führung.

Bei Schraubverbindungen werden vielfach Selbstbohrschrauben eingesetzt, welche kein Vorbohren in der Unterkonstruktion erfordern. Diese Selbstbohrschrauben können als Bimetall-Schrauben gefertigt werden mit einem Kopf und Schaft aus Edelstahl und einer angeschweissten Bohrspitze aus hartem C-Stahl. Das Setzen von Selbstbohrschrauben verlangt ein sehr sauberes Verarbeiten, weil die Korrektur einer falsch gesetzten Schraube, z. B. durch schräges oder nicht zentrisches Einbohren, nur aufwändig korrigierbar ist.

Selbstbohrende Schrauben können aber auch einstückig in Edelstahl gefertigt werden zur Verwendung auf Aluminium-Unterkonstruktionen. In solchen Fällen ist die Spitze der Schraube häufig mit einem Konus ausgestattet mit einem Konuswinkel von 25°-45°, was in Verbindung mit einem an die Spitze vorgezogenen Gewinde üblicherweise ausreicht, um ohne Vorbohren Aluminium bis zu 2.5 mm Stärke zu durchdringen

Vor diesem Hintergrund erscheint es zwar nicht rationell, Vorbohrungen an der Unterkonstruktion vor Ort auf der Baustelle vorzunehmen, weil damit (Vor-)Bohrvorgang und Verschraubung zwei getrennte Arbeitsvorgänge werden. Bei teuren Fassadenmaterialien bzw. bei geforderter besonders hoher Verarbeitungsqualität und überdurchschnittlicher Belastbarkeit jedes einzelnen Befestigungspunktes hat die Trennung jedoch auch Vorteile.

Zum Vorbohren der Unterkonstruktion kann eine Bohrlehre verwendet werden, die die vorgefertigten Durchbohrungen der Fassadenplatte als Führung verwendet: z.B. eine am Bohrgerät angebrachte, zum Bohrer konzentrische Hülse, deren Aussendurchmesser mit dem Durchmesser der Fassadenplattenbohrung übereinstimmt. Dadurch werden die Löcher in der Unterkonstruktion exakt konzentrisch zur Fassadenplatte ausgerichtet und das Schraubenbild an der Fassade präziser. Ferner kann auf selbstbohrende BiMet-Schrauben verzichtet werden, selbstfurchende Schrauben, bevorzugt Edelstahlschrauben genügen.

Wie erwähnt, ist beim sichtbaren Befestigen der Fassadenplattenelemente grosse Sorgfalt nötig und von daher sind strukturelle Massnahmen, die den Befestigungsvorgang sicherer machen, stets gefordert.

Häufig werden beim Setzen von Schrauben motorisch angetriebene Setzgeräte wie z. B. Ackuschrauber verwendet. Einfacher und in Anschaffung und Handhabung günstiger als diese sind sogenannte Tangentialschlagschrauber oder Impulsschrauber. Allerdings ist es bei diesen Setzgeräten schwieriger, über eine Drehmomentbegrenzung den Abschluss des Setzvorgangs zu definieren. Eine Schraube gemäss Stand der Technik wird den Eindrehvorgang beenden, wenn der Kopf an der Bauteiloberfläche anschlägt und so das notwendige Drehmoment die Leistung des Setzgerätes übersteigt. Allerdings kann, je nach Setzbedingungen, es auch dazu kommen, dass das Gewinde der Schraube ausreisst oder das Gewinde in der Unterkonstruktion versagt. Dann würde die Schraube überdrehen und erreicht nicht mehr die geforderten Haltekräfte. Es kann aber auch durch die Einwirkung der Kopfunterseite zu Beschädigungen an der Fassadenplatte kommen - Farbabplatzer, Kratzer in der Oberfläche, Abrieb von Korrosionsschutz.

Bisher schon wurde dieser Effekt vermieden, indem die Fassadenplattenschrauben einen separaten Anschlagbund auf dem Schraubenschaft unterhalb des eigentlichen Schraubenkopfes erhielten. Der Abstand zwischen der Schraubenkopfunterseite und dem Anschlagbund (Unterseite) entspricht der Dicke des zu montierenden Fassadenplattenelementes plus einer Toleranz von einigen Millimetern. Diese Toleranz wird im montierten Zustand von einem Dämpfungselement aus Schaumstoff ausgenutzt, das zwischen der Unterseite der Fassadenplatte und der Unterkonstruktion angeordnet wird. Beim Setzen dieser Fassadenplattenschraube wird die Setztiefe also von dem zusätzlichen Anschlagbund definiert, der an der Unterkonstruktion anschlägt und nicht vom Schraubenkopf.

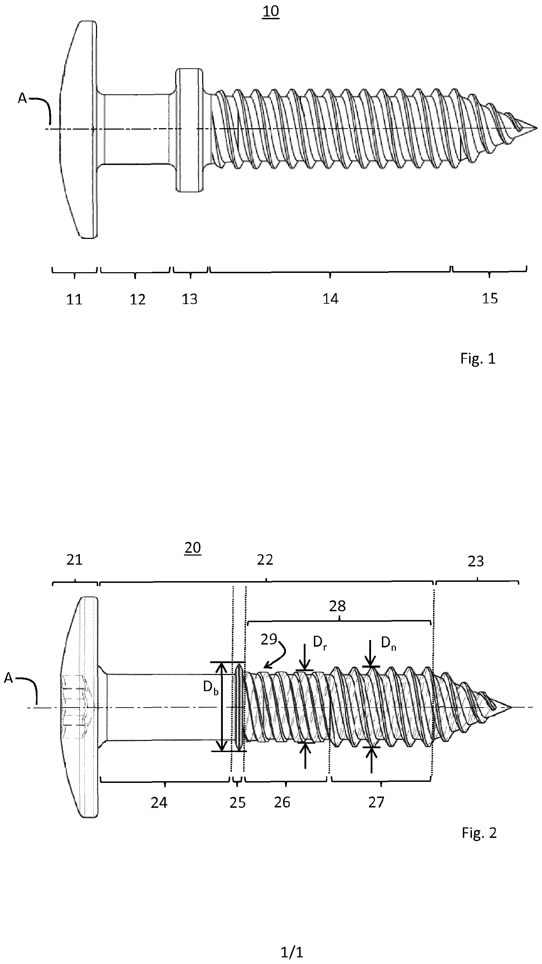

Wie in Figur 1 gezeigt, wird dieser Anschlagbund im Durchmesser immer kleiner ausgeführt werden als der Schraubenkopf, muss aber dennoch stabil genug sein, um das Drehmoment des Setzwerkzeugs aufzunehmen in dem Moment, wo der Anschlagbund seine Sollposition erreicht.

Ein massiver Anschlagbund lässt sich jedoch nur durch ein Aufstauchen des Schraubenrohlings bei der Herstellung erreichen, erfordert also einen weiteren Verfahrensschritt. Zudem muss das Material für den massiven Anschlagbund vorhanden sein, erhöht also den Materialaufwand zusätzlich.

In der Schrift WO 2015/035374 A1 werden verschraubte Gebäudestrukturen beschrieben und die dabei verwendeten Befestiger. Vorgeschlagen wird dabei eine Schraube mit einem Kopf, einem anschliessenden, zylinderförmigen Schaft und einer Bohrspitze, wobei im Schaftabschnitt, vom Kopf aus betrachtet, ein gewindefreier Unterkopfabschnitt vorliegt, gefolgt von einem Anschlagbund. An diesen schliesst sich ein Gewindeabschnitt an, der in einen (multi-)lobularen, gewindeformenden Abschnitt übergeht.

Die Aufgabe der Erfindung besteht darin, eine Fassadenplattenschraube bzw. eine Befestigungsanordnung für Fassadenplatten zu beschreiben, welche weniger Herstellschritte erfordert, sicher in der Handhabung ist, keine Änderung der gewohnten Verarbeitung am Bau nötig macht und mit einer Vielzahl von Setzgeräten einsetzbar ist und darüber hinaus wirtschaftlich herzustellen ist.

### BESCHREIBUNG DER ERFINDUNG

Diese Aufgabe wird durch eine Fassadenplattenschraube gemäss Anspruch 1 gelöst. Eine Befestigungsanordnung ist ab Anspruch 10 beschrieben. Die Unteransprüche beziehen sich auf weitere Varianten und Ausführungsbeispiele.

Eine Fassadenplattenschraube 20 weist einen grundsätzlichen Aufbau auf mit: einem Kopf 21, einem anschliessenden, im Wesentlichen zylinderförmigen, entlang einer zentralen Längsachse A ausgedehnten Schaftabschnitt 22 und einem anschliessenden Spitzenbereich 23. Der Schaftabschnitt 22 lässt sich wiederum, vom Kopf aus betrachtet, unterteilen in einen gewindefreien Unterkopfabschnitt 24, einen Anschlagbund 25 und einen Gewindeabschnitt 28. Der Gewindeabschnitt 28 wiederum lässt sich untergliedern in einen ersten Teilbereich 26, der anschliessend an den Anschlagbund 25 angeordnet ist und einen Aussendurchmesser Dᵣ aufweist und einen anschliessenden Teilbereich 27 mit Aussendurchmesser Dₙ. Der erste Teilbereich 26 ist im Vergleich zu dem Gewinde im zweiten Teilbereich 27 über mehrere Gewindegänge geschwächt, so dass gilt Dᵣ < Dₙ. Mit Schwächung ist dabei eine Schwächung des Durchmessers gemeint und wird im Bereich 26 unterhalb des Anschlagbundes 25 als achsparallele Abtragung der Gewindespitzen 29 realisiert. Das Gewinde trägt damit statt eines Gewindekammes oder einer Gewindespitze im besagten Bereich ein (im Wesentlichen) ebenes Plateau, wobei das Plateau parallel zur Mittenachse A ausgerichtet ist.

Alternativ ist eine proportionale Verkleinerung eines Gewindezuges oder einer Schwächung der Gewindebreite durch beispielsweise steilere Gewindeflanken denkbar.

Technisch betrachtet wird durch diese Gewindeschwächung erreicht, dass der Eingriff der Fassadenplattenschraube in die Unterkonstruktion am Befestigungspunkt verringert wird und beim Anschlagen der Schraube am Anschlagbund die Schraube kontrolliert überdrehen kann. Dadurch wird einerseits eine Rückdrehsicherheit erzielt, gleichzeitig stellen die verbleibenden, geschwächten Gewindegänge noch Halteflächen zur Verfügung. Das geschwächte Gewinde erlaubt eine bessere, verbleibende Klemmung als ein gewindefreier Abschnitt und das Material der Unterkonstruktion wird beim Überdrehen weniger beansprucht.

Bevorzugt wird man das Gewinde von Gewindeabschnitt 26 (geschwächt) ununterbrochen in Gewindeabschnitt 27 übergehen lassen, mit anderen Worten, der gesamte Gewindeabschnitt 28 kann durch entsprechende Auslegung des Werkzeuges in einem Arbeitsgang hergestellt werden. Ganz besonders bevorzugt wird die Steigung im gesamten Gewindeabschnitt 28 gleich gross gewählt, da dies zusätzlich einfach in der Herstellung ist.

Eine weitere Erleichterung bei der Montage wird erzielt, wenn das Gewinde der Fassadenplattenschraube im Gewindeabschnitt 28 mehrgängig, insbesondere zweigängig ausgeführt ist. Die hohe Steigung ergibt einerseits eine hohe Setzgeschwindigkeit; durch die doppelte Ausführung des Gewindeganges erfolgt weiterhin eine bessere Lastübertragung in die Unterkonstruktion und ein stabileres Einformverhalten beim Setzen.

Es hat sich gezeigt, dass eine Schwächung zwischen 10% und 30% des Nominaldurchmessers (Aussendurchmesser) Dₙ des Gewindes im Abschnitt 27 ausreicht. Alternativ ausgedrückt, wenn der geschwächte Durchmesser Dᵣ in Relation zu Dₙ gesetzt wird, Dᵣ = a Dₙ wird a Werte zwischen 0.7 und 0.9 (jeweils einschliesslich) einnehmen.

Weiterhin wird eine erfindungsgemässe Fassadenplattenschraube einen speziell dimensionierten Anschlagbund 25 aufweisen. Dessen Durchmesser D_{b} ist grösser als Dₙ (Gewindedurchmesser im Abschnitt 27). Mathematisch formuliert soll gelten D_{b} = b Dₙ, wobei b Werte zwischen 1.07 und 1.24, bevorzugt zwischen 1.1 und 1.2 einnehmen kann (jeweils einschliesslich). Der Anschlagbund wird also das Gewinde nur zwischen 7% und 24%, bevorzugt zwischen 10% bis 20% überragen.

Ferner bevorzugt ist der Anschlagbund (25) auch sehr schmal ausgeführt. Seine axiale Ausdehnung, also in Schaftorientierung betrachtet, wird weniger als 1mm betragen, bevorzugt zwischen 0.5 bis 0.8mm.

Diese sehr schmale Ausführung reicht völlig überraschend aus, um die Funktion als Anschlagbund in Verbindung mit dem geschwächten Gewinde im Abschnitt 26 zu erreichen. Wie erwähnt, wird durch das Ermöglichen des Überdrehens im Abschnitt 26 das abzufangende Drehmoment bereits verringert. Daher reicht der schmale Bund aus. Durch seine schlanke Ausführung ist er zusätzlich in der Lage sich in gewissem Masse an die Unterkonstruktion anzuformen und geht dadurch einen besseren Kraftschluss ein als ein massiver Anschlag. Als dritter Vorteil kommt hinzu, dass dieser schmale Anschlussbund nicht durch Aufstauchen hergestellt werden muss, sondern sich als Gewindeabschluss realisieren lässt und somit bei der Gewindeformung im selben Werkzeug vorgesehen werden kann.

In einer Ausführung, in einem Anwendungsfall liessen sich so der Anschlagbund 25, radial betrachtet, so auslegen, dass die Gewindespitzen im Gewindeabschnitt 27 um weniger als 1mm überragt werden, bei einem Dₙ von 5,8mm.

Eine Fassadenplattenschraube gemäss Erfindung kann im Spitzenbereich 23 eine selbstbohrende, eine selbstfurchende oder eine Bohrspitze aufweisen. Die Verwendung richtet sich dabei in erster Linie nach dem Material der Unterkonstruktion, in der Regel 2 bis 6.5mm bei Aluminium bzw. 0.9 bis 2.5mm bei Stahl.

Der Einsatz einer solchen erfindungsgemässen Fassadenplattenschraube erfolgt in einer Befestigungsanordnung, welche eine (bereits erwähnte) Unterkonstruktion, eine Fassadenplatte sowie eine Fassadenplattenschraube umfasst. Bevorzugt wird die Unterkonstruktion als Metallkonstruktion ausgeführt. Die tragenden Elemente können aus Metallrohren, - profilen bzw. -bauteilen erfolgen. Die Zahl der Befestigungspunkte wird sich am Gewicht und der Grösse der Fassadenelemente, an Windlastberechnungen (abhängig von Lage und Höhe eines Gebäudes) sowie an der geforderten Ästhetik orientieren. Üblicherweise wird bei den meisten Anwendungen am Befestigungspunkt eine Materialstärke von 2 bis 6.5mm bei Aluminium bzw. 0.9 bis 2.5mm bei Stahl gewählt.

Die Fassadenplatten sind sehr häufig ausgeführt in Kunststoff, Metall, Faserzement, Isolationsmaterialien oder aus einem Verbund einer oder mehrerer solcher Materialien. Die beschriebene Fassadenplattenschraube ist Teil eines aufeinander abgestimmten Systems. Dabei wird die axiale Länge / Ausdehnung des Unterkopfabschnitts 24 so gewählt, dass dafür gilt: Stärke der Fassadenplatte plus 2-4mm. Diese 2-4mm ergänzender Zwischenraum werden bei der Montage ausgefüllt durch eine dämpfende, isolierende, reibungsmindernde und/oder klebende Zwischenschicht zwischen der Unterkonstruktion und der Fassadenplatte. Insbesondere kann die Zwischenschicht (24) als ein Schaumstoffband, ein Klebeband, ein Dämmfilz bzw. als Kunststofflage ausgeführt sein.

### KURZBEZEICHNUNG DER FIGUREN

Figur 1 zeigt eine Fassadenplattenschraube gemäss Stand der Technik
Figur 2 zeigt eine Fassadenplattenschraube gemäss der Erfindung

### BESCHREIBUNG DER FIGUREN

In Figur 1 ist eine Fassadenplatteschraube 10 mit ihren wichtigsten Bestandteilen gezeigt. Sie besitzt einen im Durchmesser gross dimensionierten Kopf 11, dessen Durchmesser üblicherweise so gewählt wird, dass eine Abdeckung des Bohrloches gewährleistet ist, das in der Fassadenplatte vorgesehen wird. Dieses Bohrloch wird standardmässig grösser gewählt als der Nenndurchmesser der Schraube um selbst im befestigten Zustand der Fassadenplatte seitliches Spiel zu geben. Dadurch können Unterschiede der thermischen Ausdehnung zwischen Unterkonstruktion und Fassadenplatte ausgeglichen werden. Daher muss der Kopf 11 üblicherweise deutlich überdimensioniert werden.

An den Kopf schliesst sich ein gewindefreier Unterkopfabschnitt 12 an und ein Anschlagbund 13. Dessen Wirkung ist im Abschnitt "Stand der Technik" oben bereits beschrieben worden. Daran anschliessend, vom Kopf abgewandt in Richtung Spitze gesehen, schliesst sich ein Gewindeabschnitt 14 an, der in eine Spitze 15 übergeht. Das Gewinde wird üblicherweise zumindest teilweise auf der Spitze fortgeführt. Es gibt im Stand der Technik viele bekannte Auslegungsarten von Spitzen, die hier gezeigte ist nur exemplarisch dargestellt.

Figur 2 zeigt im direkten Vergleich eine erfindungsgemässe Fassadenplattenschraube 20. Sie weist einen Kopf 21 auf, dessen Dimensionierung dieselben Anforderungen erfüllen muss wie das Design gemäss Stand der Technik. An den Kopf 21 schliesst sich ein im wesentlichen zylindrischer Schaft 22 an mit einem anschliessenden bzw. die Schraube abschliessenden Spitzenbereich 23. Alle drei weisen eine gemeinsame, zentrale Mittenachse A auf.

Der Schaftabschnitt 22 setzt sich zusammen aus einem gewindefreien Unterkopfabschnitt 24 im Anschluss an die Unterseite des Schraubenkopfes 21, einem Anschlagbund 25 mit erfindungsgemässer Auslegung und einem Gewindeabschnitt 28. Dieser wiederum ist unterteilt in einen Abschnitt 26 mit geschwächtem Gewinde 29 und einem Abschnitt 27 mit üblicher Gewindeauslegung. Das Gewinde im Abschnitt 27 weist einen nominellen Durchmesser Dₙ auf, wie in Figur 2 gezeigt. Das geschwächte Gewinde 29 hat einen Durchmesser Dᵣ < Dₙ. Der Anschlagbund 25 hat einen Durchmesser D_{b}, so dass insgesamt gilt D_{b} > Dₙ > Dᵣ.

Die Schraubenspitze im Spitzenbereich 23 ist hier wieder exemplarisch als selbstfurchende Ausführung gezeigt, dies ist jedoch nicht limitierend zu verstehen.

Eine nicht-explizite Darstellung oder Beschreibung einer Kombination von Merkmalen bedeutet nicht, dass eine solche Kombination ausgeschlossen ist.

## Patentansprüche

1. Fassadenplattenschraube (20) mit einem Kopf (21), einem anschliessenden, im wesentlichen zylinderförmigen, entlang einer zentralen Längsachse (A) ausgedehnten Schaftabschnitt (22) und einem anschliessenden Spitzenbereich (23); wobei der Schaftabschnitt (22) wiederum, vom Kopf aus betrachtet, umfasst:
- eine gewindefreien Unterkopfabschnitt (24),
- einen Anschlagbund (25) und
- einen Gewindeabschnitt (28)
**dadurch gekennzeichnet, dass**
das Gewinde in einem ersten Teilbereich (26) des Gewindeabschnitts (28) anschliessend an den Anschlagbund (25) einen Aussendurchmesser Dᵣ aufweist, welcher im Vergleich zu dem Gewinde in einem zweiten Teilbereich (27) mit Aussendurchmesser Dₙ über mehrere Gewindegänge durch achsparallele Abtragung der Gewindespitzen (29) geschwächt ist, so dass gilt Dᵣ < Dₙ.

2. Fassadenplattenschraube (20) nach Anspruch 1, **dadurch gekennzeichnet, dass** das Gewinde von Gewindeabschnitt (26) ununterbrochen in Gewindeabschnitt (27) übergeht

3. Fassadenplattenschraube (20) nach Anspruch 1 und/oder2, **dadurch gekennzeichnet, dass** die Steigung im gesamten Gewindeabschnitt (28) gleich gross ist.

4. Fassadenplattenschraube (20) nach Anspruch 1 - 3, **dadurch gekennzeichnet, dass** das Gewinde im Gewindeabschnitt (28) mehrgängig, insbesondere zweigängig ausgeführt ist.

5. Fassadenplattenschraube (20) nach Anspruch 1 - 4, **dadurch gekennzeichnet, dass** gilt Dᵣ = a Dₙ wobei a Werte zwischen 0.7 und 0.9 (jeweils einschliesslich) einnehmen kann.

6. Fassadenplattenschraube (30) nach Anspruch 1 - 5, **dadurch gekennzeichnet, dass** der Anschlagbund (25) einen Durchmesser D_{b} aufweist für den gilt: D_{b} = b Dₙ, wobei b Werte zwischen 1.07 und 1.24, bevorzugt zwischen 1.1 und 1.2 einnehmen kann (jeweils einschliesslich).

7. Fassadenplattenschraube (20) nach Anspruch 1 - 6, **dadurch gekennzeichnet, dass** der Anschlagbund (25) eine axiale Ausdehnung von weniger als 1mm aufweist, bevorzugt zwischen 0.5 bis 0.8mm.

8. Fassadenplattenschraube (20) nach Anspruch 1 - 7, **dadurch gekennzeichnet, dass** der Anschlagbund (25), radial betrachtet, die Gewindespitzen im Gewindeabschnitt (27) um weniger als 1mm überragt.

9. Fassadenplattenschraube (20) nach Anspruch 1 - 8, **dadurch gekennzeichnet, dass** der Spitzenbereich (23) eine selbstbohrende, eine selbstfurchende oder eine Bohrspitze ist.

10. Befestigungsanordnung umfassend eine Unterkonstruktion, eine Fassadenplatte sowie eine Fassadenplattenschraube (20) nach Anspruch 1 - 9.

11. Befestigungsanordnung nach Anspruch 10, **dadurch gekennzeichnet, dass** die Unterkonstruktion eine Metallkonstruktion ist und am Befestigungspunkt eine Materialstärke von 2 bis 6.5mm aus Aluminium bzw. 0.9 bis 2.5mm aus Stahl aufweist

12. Befestigungsanordnung nach Anspruch 10 - 11, **dadurch gekennzeichnet, dass** die Fassadenplatte aus Kunststoff, Metall, Faserzement, Isolationsmaterialien oder aus einem Verbund einer oder mehrerer solcher Materialien besteht.

13. Befestigungsanordnung nach Anspruch 10 - 12, **dadurch gekennzeichnet, dass** der Unterkopfabschnitt (24) eine Ausdehnung in axialer Richtung aufweist, die sich als Stärke der Fassadenplatte plus 2-4mm ergibt.

14. Befestigungsanordnung (20) nach Anspruch 10 - 13, **dadurch gekennzeichnet, dass** zwischen der Unterkonstruktion und der Fassadenplatte eine dämpfende, isolierende, reibungsmindernde und/oder klebende Zwischenschicht angebracht ist.

## Claims

1. Façade panel screw (20), comprising a head (21), an adjacent substantially cylindrical shank portion (22) extending along a central longitudinal axis (A), and an adjacent tip region (23); wherein the shank portion (22) in turn comprises, as viewed from the head:
- a threadless lower head portion (24),
- a stop collar (25) and
- a threaded portion (28),
**characterized in that**
the thread in a first partial region (26) of the threaded portion (28) adjacent to the stop collar (25) has an external diameter Dᵣ which is weakened in comparison with the thread in a second partial region (27) with an external diameter Dₙ over several thread turns due to axially parallel erosion of the thread tips (29), so that Dᵣ < Dₙ applies.

2. Façade panel screw (20) according to claim 1, **characterized in that** the thread from threaded portion (26) merges uninterruptedly into threaded portion (27).

3. Façade panel screw (20) according to claim 1 and/or 2, **characterized in that** the pitch is the same in the entire threaded portion (28).

4. Façade panel screw (20) according to claim 1-3, **characterized in that** the thread in the threaded portion (28) is multi-start, in particular double-start.

5. Façade panel screw (20) according to claim 1-4, **characterized in that** Dᵣ = a Dₙ, wherein a can assume values between 0.7 and 0.9 (inclusive in each case).

6. Façade panel screw (30) according to claim 1-5, **characterized in that** the stop collar (25) has a diameter D_{b}, for which applies: D_{b} = b Dₙ, wherein b can assume values between 1.07 and 1.24, preferably between 1.1 and 1.2 (inclusive in each case).

7. Façade panel screw (20) according to claim 1-6, **characterized in that** the stop collar (25) has an axial extension of less than 1 mm, preferably between 0.5 to 0.8 mm.

8. Façade panel screw (20) according to claim 1-7, **characterized in that** the stop collar (25), as viewed radially, projects beyond the thread tips in the threaded portion (27) by less than 1 mm.

9. Façade panel screw (20) according to claim 1-8, **characterized in that** the tip region (23) is a self-drilling, a self-tapping or a drilling tip.

10. Fastening arrangement, comprising a substructure, a façade panel, and a façade panel screw (20) according to claim 1-9.

11. Fastening arrangement according to claim 10, **characterized in that** the substructure is a metal structure and has a material thickness of 2 to 6.5 mm made of aluminum or 0.9 to 2.5 mm made of steel at the fastening point.

12. Fastening arrangement according to claim 10-11, **characterized in that** the façade panel consists of plastic, metal, fiber cement, insulation materials or of a composite of one or more such materials.

13. Fastening arrangement according to claim 10-12, **characterized in that** the lower head portion (24) has an extension in the axial direction which is the thickness of the façade panel plus 2-4 mm.

14. Fastening arrangement (20) according to claim 10-13, **characterized in that** a damping, insulating, friction-reducing and/or adhesive intermediate layer is applied between the substructure and the façade panel.

## Revendications

1. Vis pour panneau de façade (20) avec une tête (21), un segment de corps (22) sensiblement cylindrique qui s'étend sur un axe longitudinal central (A) et une partie de pointe (23) qui lui fait suite, dans laquelle le segment de corps (22) présente pour sa part, à partir de la tête :
- une partie sous tête (24) non filetée,
- un collet de butée (25) et
- un segment fileté (28),
**caractérisée en ce que** le filetage d'une première partie (26) du segment fileté (28) faisant suite au collet de butée (25) présente un diamètre extérieur Dᵣ qui est affaibli par rapport au filetage d'une deuxième partie (27) de diamètre extérieur Dₙ sur plusieurs spires de filetage par l'enlèvement parallèle à l'axe des sommets du filet (29), de sorte que l'on a Dᵣ < Dₙ.

2. Vis pour panneau de façade (20) selon la revendication 1, **caractérisée en ce que** le filetage du segment fileté (26) passe sans interruption dans le segment fileté (27).

3. Vis pour panneau de façade (20) selon la revendication 1 et/ou 2, **caractérisée en ce que** le pas est le même dans tout le segment fileté (28).

4. Vis pour panneau de façade (20) selon les revendications 1 à 3, **caractérisée en ce que** le filetage du segment fileté (28) est réalisé avec plusieurs filets, de préférence à filet double.

5. Vis pour panneau de façade (20) selon les revendications 1 à 4, **caractérisée en ce que** l'on a Dᵣ = a Dₙ, où a peut prendre des valeurs comprises entre 0,7 (inclus) et 0,9 (inclus).

6. Vis pour panneau de façade (30) selon les revendications 1 à 5, **caractérisée en ce que** le collet de butée (25) présente un diamètre D_{b} pour lequel on a D_{b} = b Dₙ, où b peut prendre des valeurs comprises entre 1,07 (inclus) et 1,24 (inclus), de préférence entre 1,1 (inclus) et 1,2 (inclus).

7. Vis pour panneau de façade (20) selon les revendications 1 à 6, **caractérisée en ce que** le collet de butée (25) a une étendue axiale de moins de 1 mm, de préférence de 0,5 à 0,8 mm.

8. Vis pour panneau de façade (20) selon les revendications 1 à 7, **caractérisée en ce que** le collet de butée (25) dépasse de moins de 1 mm dans le sens radial des sommets du filetage dans le segment fileté (27).

9. Vis pour panneau de façade (20) selon les revendications 1 à 8, **caractérisée en ce que** la partie de pointe (23) est une pointe autoperçante, une pointe autotaraudeuse ou une pointe de foret.

10. Dispositif de fixation comprenant une substructure, un panneau de façade et une vis pour panneau de façade (20) selon les revendications 1 à 9.

11. Dispositif de fixation selon la revendication 10, **caractérisé en ce que** la substructure est une construction métallique et a une épaisseur de matériau au point de fixation de 2 à 6,5 mm si elle est en aluminium ou 0,9 à 2,5 mm si elle est en acier.

12. Dispositif de fixation selon les revendications 10 à 11, **caractérisé en ce que** le panneau de façade est fait de matériau de synthèse, de métal, de fibrociment, de matériaux isolants ou d'un composite d'un ou plusieurs de ces matériaux.

13. Dispositif de fixation selon les revendications 10 à 12, **caractérisé en ce que** la partie sous tête (24) présente une étendue dans le sens axial qui correspond à l'épaisseur du panneau de façade plus 2 à 4 mm.

14. Dispositif de fixation (20) selon les revendications 10 à 13, **caractérisé en ce qu'**une couche intermédiaire amortissante, isolante, réduisant les frottements et/ou adhésive est intercalée entre la substructure et le panneau de façade.
